# EUROPÄISCHE PATENTSCHRIFT

(11) **EP 2 736 762 B1**
(45) Veröffentlichungstag und Bekanntmachung des Hinweises auf die Patenterteilung: **20.01.2016**
(21) Anmeldenummer: 12730402.0
(22) Anmeldetag: 29.06.2012
(51) Int. Cl.: B60N 2/07, B60N 2/08

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE À MOTEUR

(30) Priorität: 25.07.2011 DE 102011108652
(43) Veröffentlichungstag der Anmeldung: 04.06.2014
(73) Patentinhaber: Johnson Controls Components GmbH & Co. KG, 67657 Kaiserslautern (DE)
(72) Erfinder: KRAMM, Lars, 67705 Trippstadt (DE); HAESSEL, Thomas, 66871 Haschbach (DE)
(74) Vertreter: Wilhelm, Wolfgang
(86) Internationale Anmeldenummer: PCT/EP2012/002767
(87) Internationale Veröffentlichungsnummer: WO 2013/013757

(56) Entgegenhaltungen:
- DE-A1-102008 060 824
- DE-A1-102009 010 226

## Beschreibung

Die Erfindung betrifft einen Fahrzeugsitz, insbesondere Kraftfahrzeugsitz, mit den Merkmalen des Oberbegriffs des Anspruches 1.

### Stand der Technik

Aus der DE 10 2007 062 635 B4 ist ein Fahrzeugsitz bekannt, mit einem Sitzkissen, einem Sitzrahmen, der das Sitzkissen trägt, einem Längseinsteller, welcher zur Längseinstellung des Fahrzeugsitzes betätigbar ist, und einem Höheneinsteller zur Einstellung der Höhe des Sitzkissens relativ zum Längseinsteller. Am vorderen Ende des Sitzkissens oder am vorderen Ende des Sitzrahmens ist ein Entriegelungselement angeordnet, welches in Wirkverbindung mit dem Längseinsteller steht, um diesen manuell zu betätigen. Die Wirkverbindung kann mittels eines Bowdenzugs hergestellt werden, dessen Seele direkt mit einem Ende eines schwenkbar gelagerten Hebel verbunden ist und hiermit mittels Übertragung einer Zugkraft zusammenwirkt. Hierbei schwenkt der Hebel bei einem Ziehen am Entriegelungselement und wirkt mit dem anderen Ende von oben auf einen überstehenden Betätigungsstift einer Sitzschienenverriegelungsvorrichtung zusammen, wie sie vom Prinzip her beispielsweise in der WO 2010 051 903 A1 offenbart ist. Hierbei ist die Schwenkachse des Hebels zwischen den beiden Enden des Hebels angeordnet.

Eine derartige Anordnung lässt noch Wünsche offen.

Aus der DE 203 18 787 U1 ist eine Betätigungseinrichtung für einen Kraftfahrzeugsitz bekannt, welche einen Betätigungshebel aufweist, welcher mittels eines Bowdenzugs schwenkbar ist. Die Seele des Bowdenzugs ist dabei an dem Betätigungshebel befestigt. Wird der Betätigungshebel von dem Bowdenzug beaufschlagt, so erfährt er eine Drehung um eine horizontal verlaufende Achse und betätigt damit indirekt über einen Hebel die Verriegelungsvorrichtung.

Gattungsgemässe Betätigungsvorrichtungen sind in der DE 10 2009 010 226 A1 sowie in der DE 10 2008 060 824 A1 offenbart.

### Aufgabe

Der Erfindung liegt die Aufgabe zu Grunde, einen Fahrzeugsitz, insbesondere einen Kraftfahrzeugsitz, der eingangs genannten Art zu verbessern.

### Lösung

Diese Aufgabe wird erfindungsgemäß durch einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Erfindungsgemäß ist hierbei ein Fahrzeugsitz, insbesondere Kraftfahrzeugsitz, vorgesehen, mit einem Längseinsteller und mit einem Sitzschienenpaar mit einer strukturfesten ersten Sitzschiene, einer in dieser ersten Sitzschiene in Sitzlängsrichtung geführten, mit dem Fahrzeugsitz verbundenen zweiten Sitzschiene, mit einer lösbaren Verriegelungsvorrichtung mit mindestens einem Betätigungsstift, welcher zumindest in einer Stellung über die zweite Sitzschiene hinausragt, mit einem schwenkbar angeordneten Betätigungshebel, mit einem Bowdenzug mit einer Hülle und einer Seele, wobei ein schienenfester Halter vorgesehen ist, welcher den Betätigungshebel an einem Ende verschwenkbar um eine Schwenkachse lagert und wobei am Betätigungshebel eine Anlagefläche ausgebildet ist, an welcher die Seele des Bowdenzugs in einem Teilbereich zwischen dem Ende der Hülle und dem Ende der Seele anliegt, und wobei der schienenfester Halter das Ende der Seele des Bowdenzugs festlegt, und wobei der Betätigungshebel eine Bowdenzugabstützung aufweist, an welcher sich die Hülle des Bowdenzugs direkt oder indirekt abstützt.

Durch die Einhängung der Seele am Ende des Halters und das Anliegen der Seele an der Anlagefläche ergibt sich eine einfache Montage des Bowdenzugs. Weiterhin wird durch diese Anordnung des Bowdenzugs die Lagerstelle des Betätigungshebels an dem Halter entlastet.

Bevorzugt ist der Halter und/oder der Betätigungshebel durch ein Kunststoffteil gebildet. Dies ermöglicht Gewichts- und Kostenersparnis.

Vorzugsweise ist die Anlagefläche des Betätigungshebels durch eine Nut gebildet. Die Nut stellt eine exakte Führung der Seele sicher, wobei die Seele automatisch in der Nut zu liegen kommt, so dass keine exakte Positionierung von Hand erforderlich ist.

Vorzugsweise ist am Bowdenzug eine Längenausgleichsvorrichtung vorgesehen, welche zwischen Hülle und Bowdenzugabstützung angeordnet ist. Die Anordnung der Längenausgleichsvorrichtung des Bowdenzugs an diesem Ende ermöglicht eine einfache Anbringung des Bowdenzugs sowie einen einfachen Längenausgleich, insbesondere zum Ausgleich von Toleranzen.

Besonders einfach kann der Bowdenzug mittels eines Clips an der Bowdenzugabstützung des Betätigungshebels angebracht werden. Dies ermöglicht eine sehr einfache Montage des Bowdenzugs.

Der Halter weist bevorzugt zwei seitliche Führungen auf, zwischen denen der Betätigungshebel positioniert ist und zu denen er unter Verschwenken um die Schwenkachse relativ beweglich ist.

Insbesondere bevorzugt ist seitlich am Betätigungshebel mindestens eine Rippe vorgesehen, welche in Anlage an die entsprechende seitliche Führung ist. Es können auch mehrere Rippen vorgesehen sein, insbesondere auch auf beiden Seiten des Betätigungshebels. Die Rippen erhöhen zudem die Steifigkeit des Betätigungshebels und ermöglichen eine Gewichtsverringerung.

Die Rippe ist vorzugsweise konzentrisch zur Schwenkachse angeordnet, wobei die Rippe sowohl an einer Fläche entlanggleiten kann als auch zur zusätzlichen Führung in einer Führungsnut geführt werden kann.

Der Betätigungshebel ist bevorzugt auf einer Achse verschwenkbar gelagert. Die Achse ist vorzugsweise am Halter vorgesehen oder ausgebildet und erstreckt sich in Querrichtung zwischen zwei seitlichen Führungen, welche durch Seitenflächen des Halters gebildet sind.

Insbesondere bevorzugt ist ein achsenseitiges Ende des Betätigungshebel einseitig offen ausgebildet und sitzt auf der Achse. Dies ermöglicht eine einfache Montage und Demontage, wobei der Betätigungshebel einfach aufgesetzt werden kann, ggf. unter leichter Verformung der Arme des Endbereichs.

Der Betätigungshebel hat vorzugsweise ein von der Schwenkachse beabstandetes Ende, welches eine erste, obere Krümmung aufweist, welche mit mindestens einem Teilbereich die Anlagefläche für die Seele bildet, und eine zweite, untere Krümmung aufweist, welche eine Anlagefläche für den Betätigungsstift bildet. Die erste gekrümmte Anlagefläche stellt eine definierte Krümmung der Seele sicher, die zweite Krümmung stellt eine möglichst tangentiale Anlage von Betätigungshebel am vorstehenden Ende des Betätigungsstifts der Verriegelungsvorrichtung sicher.

Wenn der Betätigungshebel Rippen und die seitlichen Führungen des Halters Führungsnuten und/oder der Betätigungshebel Führungsnuten und die seitlichen Führungen des Halters Rippen aufweist, welche konzentrisch zur Schwenkachse angeordnet sind, wird die Bewegung des Betätigungshebels gesichert. Insbesondere bevorzugt ist eine Rippe am Betätigungshebel in Höhe der Kontaktfläche zwischen Betätigungshebel und Betätigungsstift positioniert. Dies ermöglicht gleichzeitig eine verbreiterte Ausgestaltung des Betätigungshebels im Kontaktbereich, ohne dass der ganze Betätigungshebel dick ausgebildet sein muss.

Ein derartiger Fahrzeugsitz kann beispielsweise bei einem Personenkraftfahrzeug oder einem Nutzfahrzeug verwendet werden, wobei es sich nicht notwendigerweise um den Fahrersitz handeln muss. Ein derartiger Fahrzeugsitz ist vorzugsweise in einer vorderen Sitzreihe vorgesehen, er kann aber auch in einer mittleren oder hinteren Sitzreihe vorgesehen sein, beispielsweise auch bei einen Van.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:

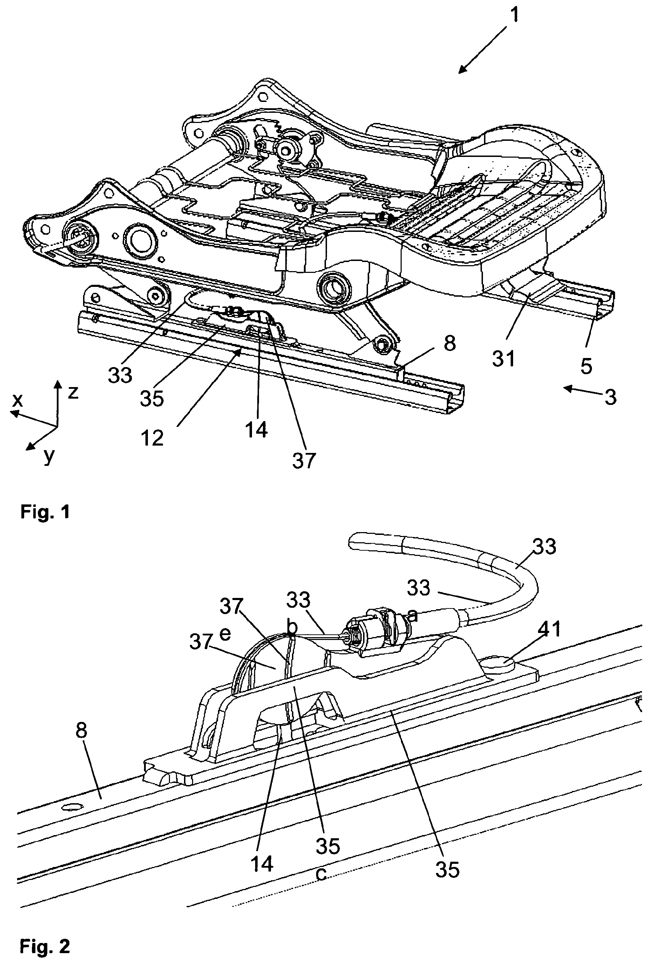

- Fig. 1:: eine perspektivische Ansicht eines Unterbaus eines längseinstellbaren Fahrzeugsitzes,
- Fig. 2:: eine perspektivische Detaildarstellung des Übertragungsbereichs,
- Fig. 3:: eine perspektivische Explosionsdarstellung der Teile im Übertragungsbereich,
- Fig. 4:: eine Seitenansicht des Übertragungsbereichs im verriegelten Zustand,
- Fig. 5:: eine Seitenansicht des Übertragungsbereichs im entriegelten Zustand,
- Fig. 6:: eine Schnittdarstellung des Übertragungsbereichs im entriegelten Zustand und
- Fig. 7:: eine schematische Seitenansicht eines Fahrzeugsitzes mit zwei Sitzschienenpaaren.

Ein Fahrzeugsitz 1 eines Kraftfahrzeuges weist einen Längseinsteller 3 auf, mittels dessen der Fahrzeugsitz 1 längseinstellbar ist, d.h. dessen Sitzlängsposition in Sitzlängsrichtung x einstellbar ist. Die Sitzlängsrichtung x verläuft in der Regel parallel zur Fahrtrichtung. Der manuell betätigbare Längseinsteller 3 weist auf beiden Fahrzeugsitzseiten je eine erste Sitzschiene 5, die mit der Fahrzeugstruktur des Kraftfahrzeuges verbunden wird, und je eine zweite Sitzschiene 8 auf, die relativ zur zugeordneten ersten Sitzschiene 5 in Sitzlängsrichtung x verschieblich und mit dieser ersten Sitzschiene 5 verriegelbar ist. Dabei umgreifen sich die erste Sitzschiene 5 und die zweite Sitzschiene 8 gegenseitig mit ihren im wesentlichen U-förmigen Profilen mit nach innen bzw. nach außen gebogenen Längsrändern unter Zwischenlage von nicht näher dargestellten, in Kugelkäfigen angeordneten Kugeln.

Zum Verriegeln von erster Sitzschiene 5 und zweiter Sitzschiene 8 ist auf jeder Fahrzeugsitzseite eine Verriegelungsvorrichtung 12 vorgesehen, welche jeweils in der Verriegelungsrichtung z in der zweiten Sitzschiene 8 beweglich geführt und zum Zusammenwirken mit der ersten Sitzschiene 5 ausgebildet sind. In Bezug auf die Ausgestaltung der Verriegelungsvorrichtung 12 sei beispielhaft auf die EP 1 227 950 B1 hingewiesen, die mit Zähnen versehene Rastplatten aufweist, welche zum Verriegeln in entsprechend ausgebildete Rastöffnungen in der ersten Sitzschiene 5 greifen und zum Lösen der Verriegelung aus diesen Rastöffnungen nach unten herausgedrückt werden. Wesentlich für das vorliegende Ausführungsbeispiel ist jedoch lediglich, dass ein Betätigungsstift 14 vorgesehen ist, der durch die zweite Sitzschiene 8 hindurchragt und mit den Rastplatten zum Lösen der Verriegelung zusammenwirkt.

Zur Entriegelung der Längseinsteller 3 ist vorn auf der Sitzunterseite ein Griff 31 vorgesehen, der um eine in y-Richtung verlaufende Achse verschwenkbar am entsprechenden Sitzrahmen angebracht ist. Der Griff 31 bildet eine (erste) Betätigungseinrichtung, um die Verriegelungsvorrichtung 12 zu entriegeln. Für die Übertragung der Griffbetätigung ist ein Bowdenzug 33 mit einer Hülle 33a und einer Seele 33b vorgesehen. Das vom Griff 31 beabstandete Ende der Seele 33b ist verdickt ausgebildet und in einer schienenfesten Einhängung 35a, welche Teil eines Halters 35 aus Kunststoff ist, eingehängt. Die Fixierung des Seelenendes am Halter 35 kann auch auf andere Weise erfolgen, beispielsweise mittels eines die Seele haltenden klapp- und verriegelbaren Bügels oder mittels Schrauben, welche durch ein ggf. am Seelenende vorgesehenes Auge ragen. Der Halter 35 weist eine sich in Querrichtung y zwischen zwei Seitenflächen erstreckende Achse 35b auf, welcher eine Schwenkachse S bildet. Auf der Achse 35b ist ein Betätigungshebel 37 verschwenkbar am Halter 35 angebracht.

Das achsenseitige Ende 37a des Betätigungshebel 37 ist einseitig offen ausgebildet. Das andere einhängungsseitige Ende 37b ist verdickt ausgebildet und weist oben eine Nut 37c auf, die mit einem relativ großen Krümmungsradius in Bezug auf die Querrichtung y ausgebildet ist. Auch auf der Unterseite ist das einhängungsseitige Ende 37b mit einem relativ großen Krümmungsradius ausgebildet, wobei sichergestellt ist, dass das überstehende Ende des Betätigungsstifts 14 im Wesentlichen senkrecht an der Fläche in diesem Bereich anliegt, auch wenn der Betätigungshebel 37 nach unten geschwenkt wird und den Betätigungsstift 14 nach unten drückt, um die Verriegelungsvorrichtung 12 zu lösen.

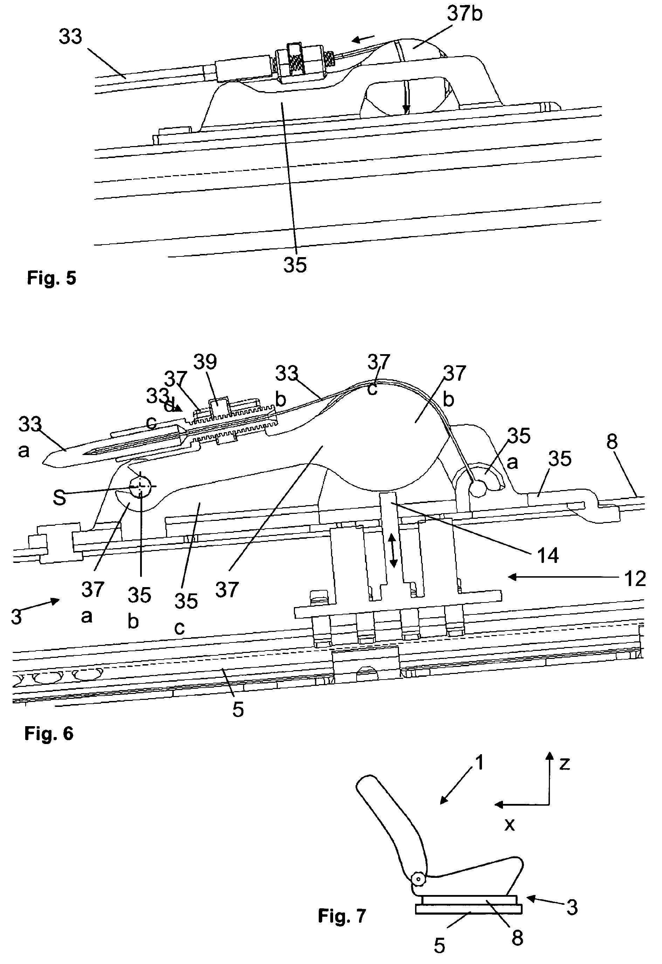

In der Nut 37c ist die Seele 33b des Bowdenzugs 33 angeordnet, d.h. der Nutgrund bildet vorliegend zumindest über einen Teil seiner Länge eine gekrümmt verlaufende Anlagefläche für die Seele 33b. Die Hülle 33a des Bowdenzugs 33 stützt sich über eine Längenausgleichsvorrichtung 33c, wie in Fig. 6 dargestellt, an einer Bowdenzugabstützung 37d ab, wobei ein in einen Schlitz der Bowdenzugabstützung 37d eingeführter und eingeclipster Clip 39 den Bowdenzug 33 im Bereich der Längenausgleichsvorrichtung 33c am Betätigungshebel 37 sichert.

Im Prinzip kann eine Längenausgleichsvorrichtung auch an anderer Stelle des Bowdenzugs vorgesehen sein, so dass sich ggf. die Hülle auch direkt an der Bowdenzugabstützung 37d des Betätigungshebels 37 abstützen kann. Ebenfalls kann die Sicherung des Bowdenzugs an der Bowdenzugabstützung auch auf andere Weise erfolgen.

Die Schwenkbewegung des Betätigungshebels 37 wird durch die Seitenflächen des Halters 35 geführt, d.h. die Seitenflächen bilden seitliche Führungen 35c für den Betätigungshebel 37. Zur zusätzlichen Versteifung des Betätigungshebels 37 sind vorliegend auf den Seitenflächen des Betätigungshebels 37 vorliegend konzentrisch zur Schwenkachse angeordnete Rippen 37e ausgebildet, welche an den seitlichen Führungen 35c anliegen. Vorliegend sind am Betätigungshebel 37 drei Rippen 37e vorgesehen, eine jeweils an den Enden des verdickt ausgebildeten Bereichs des Betätigungshebels 37 und die mittlere in Höhe der Kontaktfläche zwischen Betätigungshebel 37 und Betätigungsstift 14, wodurch der Betätigungshebel 37 im Kontaktbereich zwischen Betätigungshebel 37 und Betätigungsstift 14 etwas breiter ausgebildet ist.

Alternativ können zur zusätzlichen Führung neben den konzentrisch zur Schwenkachse angeordneten Rippen 37e auf den Seitenflächen des Betätigungshebels 37 in den seitlichen Führungen 35c entsprechenden Führungsnuten ausgebildet sein.

Die Führungen können alternativ auch gerade ausgeführt sein, d.h. die Rippen entfallen.

Der Halter 35 ist vorliegend mit einem Ende in eine in der zweiten Sitzschiene 8 ausgebildete Öffnung eingeführt und mittels eines Niets 41, welcher am anderen Ende in miteinander fluchtende Öffnungen im Halter 35 und der zweiten Sitzschiene 8 eingeführt ist, fixiert. Die Befestigung des Halters 35 kann jedoch auch auf beliebige andere Weise erfolgen, beispielsweise mittels zweier Niete oder Schrauben.

Vorliegend sind sowohl Halter 35 als auch Betätigungshebel 37 als Kunststoffspritzgussteile ausgebildet. Sie können aber auch aus einem anderen geeigneten Material bestehen, wie beispielsweise aus Leichtmetall oder einem Verbundwerkstoff. Insbesondere die Achse 35b kann aus einem eingespritzten oder nachträglich eingesetzten Metallstift gebildet sein.

Die Funktion ist Folgende: Wird der Griff 31 betätigt, so erfolgt über den Bowdenzug 33 eine Übertragung der Betätigung indem sich Hülle 33a und Seele 33b relativ verschieben. Hierbei wird an der Seele 33b gezogen, so dass sie - unter Halten des Seelenendes in der Einhängung 35a des Halters 35 - in die Hülle 33a gezogen wird, während die Hülle 33a sich an der Bowdenzugabstützung 37d abstützt. Aufgrund der "Verkürzung" der Seele 33b wird der Betätigungshebel 37 um die Schwenkachse S gedreht und das einhängungsseitige Ende 37b wird nach unten gedrückt (vgl. Fig. 5), wobei es von oben auf den Betätigungsstift 14 der Verriegelungsvorrichtung 12 drückt. Dadurch werden die Rastplatten nach unten gedrückt und aus den Rastöffnungen geschoben, so dass die Sitzschienenverriegelung gelöst ist und der Fahrzeugsitz 1 in seiner Längsposition verschoben werden kann. Aufgrund des Verlaufs der Seele 33b über die Anlagefläche am äußersten Ende des Betätigungshebels 37 und der Anordnung der Kontaktfläche im mittleren Bereich des einhängungsseitigen Endes 37b des Betätigungshebels 37 ergibt sich zudem eine Übersetzung der für die Entriegelung benötigten Zugkraft.

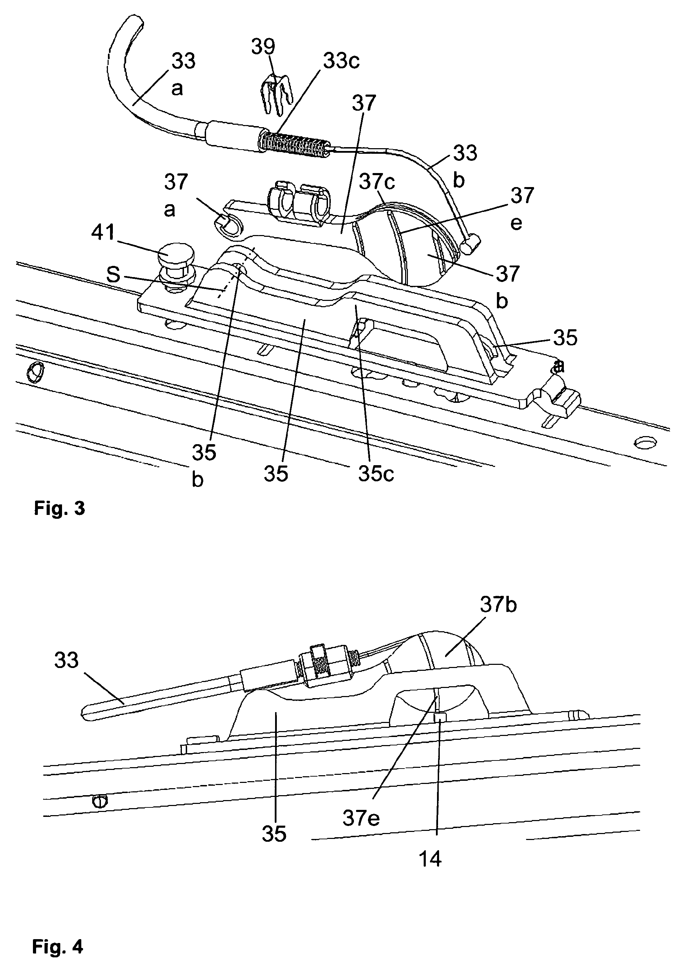

Wird der Griff 31 wieder losgelassen, so bewegen sich, bedingt durch eine entsprechende Federvorspannung, Hülle 33a und Seele 33b wieder in ihre Ausgangslage (vgl. Fig. 4), wodurch die Kraft auf den Betätigungsstift 14 endet und die Rastplatten durch die Kraft von Zugfedern wieder in die Rastöffnungen zwischen den Zähnen gezogen werden, so dass die Verriegelungsvorrichtung 12 wieder verriegelt ist.

Bei geeigneter Ausgestaltung der Breite des Betätigungshebels 37 und Anordnung der seitlichen Führungen 35c des Halters 35 kann im Prinzip die Nut 37c am Betätigungshebel 37 entfallen, so dass die entsprechende, gekrümmt ausgebildete Seitenfläche des Betätigungshebels 37 direkt die Anlagefläche für die Seele 33b bilden kann.

Eine (zweite) Betätigungseinrichtung kann beispielsweise durch weitere Bowdenzüge, die mit einem Vorklappen der Lehne gekoppelt sind, vorgesehen sein, um für das Einnehmen einer Easy-Entry-Stellung den Fahrzeugsitz 1 ganz nach vorn zu verfahren. Auch diese nicht näher dargestellte zweite Betätigungseinrichtung kann auf entsprechende Weise mit der Verriegelungsvorrichtung 12 zusammenwirken. Gegebenenfalls weist der Betätigungshebel 37 hierfür eine zweite Nut und der Halter 35 eine zweite Einhängung 35a zur Aufnahme der Seele des zweiten Bowdenzugs auf.

Alternativ zur vorstehend beschriebenen Ausgestaltung kann die Hülle 33a des Bowdenzugs 33 auch an einer Abstützung am Halter 35 befestigt sein.

Im Prinzip ist auch eine einstückige Ausgestaltung der zweiten Sitzschiene mit dem Halter denkbar, wofür die Sitzschiene entsprechende seitliche Führungen, beispielsweise gebildet durch hochgestellte Materialbereiche in Verbindung mit einer den Betätigungshebel lagernden Achse und einer Einhängung für das Seelenende aufweist.

Durch eine ausreichend hohe Form der seitlichen Führungen 35c des Halters 35 kann ferner ein Trittschutz realisiert werden, der eine Betätigung oder Beschädigung der Entriegelung verhindert.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 3: Längseinsteller
- 5: erste Sitzschiene
- 8: zweite Sitzschiene
- 12: Verriegelungsvorrichtung
- 14: Betätigungsstift
- 31: Griff
- 33: Bowdenzug
- 33a: Hülle
- 33b: Seele
- 33c: Längenausgleichsvorrichtung
- 35: Halter
- 35a: Einhängung
- 35b: Achse
- 35c: seitliche Führung
- 37: Betätigungshebel
- 37a: achsenseitiges Ende
- 37b: einhängungsseitiges Ende
- 37c: Nut
- 37d: Bowdenzugabstützung
- 37e: Rippe
- 39: Clip
- 41: Niet
- S: Schwenkachse
- x: x-Richtung, Sitzlängsrichtung
- y: y-Richtung, Querrichtung
- z: z-Richtung, Verriegelungsrichtung

## Patentansprüche

1. Fahrzeugsitz (1), insbesondere Kraftfahrzeugsitz,
mit einem Längseinsteller (3),
mit einem Sitzschienenpaar (5, 8) mit einer strukturfesten ersten Sitzschiene (5), einer in dieser ersten Sitzschiene (5) in Sitzlängsrichtung (x) geführten, mit dem Fahrzeugsitz (1) verbundenen zweiten Sitzschiene (8),
einer lösbaren Verriegelungsvorrichtung (12) mit mindestens einem Betätigungsstift (14), welcher zumindest in einer Stellung über die zweite Sitzschiene (8) hinausragt,
einem schwenkbar angeordneten Betätigungshebel (37),
einem Bowdenzug (33) mit einer Hülle (33a) und einer Seele (33b),
wobei ein schienenfester Halter (35) vorgesehen ist, welcher den Betätigungshebel (37) an einem Ende (37a) verschwenkbar um eine Schwenkachse (S) lagert
und am Betätigungshebel (37) eine Anlagefläche ausgebildet ist, an welcher die Seele (33b) des Bowdenzugs (33) in einem Teilbereich zwischen dem Ende der Hülle (33a) und dem Ende der Seele (33b) anliegt,
**dadurch gekennzeichnet, dass**
der schienenfester Halter (35) das Ende der Seele (33b) des Bowdenzugs (33) festlegt, und dass
der Betätigungshebel (37) eine Bowdenzugabstützung (37d) aufweist, an welcher sich die Hülle (33a) des Bowdenzugs direkt oder indirekt abstützt.

2. Fahrzeugsitz nach Anspruch 1, **dadurch gekennzeichnet, dass** der Halter (35) und/oder der Betätigungshebel (37) durch ein Kunststoffteil gebildet ist.

3. Fahrzeugsitz nach Anspruch 1 oder 2, **dadurch gekennzeichnet, dass** die Anlagefläche des Betätigungshebels (37) durch eine Nut (37c) gebildet ist.

4. Fahrzeugsitz nach einem der vorhergehenden Ansprüche, **dadurch gekennzeichnet, dass** am Bowdenzug (33) eine Längenausgleichsvorrichtung (33c) vorgesehen ist, welche zwischen Hülle (33a) und Bowdenzugabstützung (37d) des Betätigungshebels (37) angeordnet ist.

5. Fahrzeugsitz nach einem der vorhergehenden Ansprüche, **dadurch gekennzeichnet, dass** der Bowdenzug (33) mittels eines Clips (39) am Betätigungshebel (37) anbringbar ist.

6. Fahrzeugsitz nach einem der vorhergehenden Ansprüche, **dadurch gekennzeichnet, dass** der Halter (35) zwei seitliche Führungen (35c) aufweist, zwischen denen der Betätigungshebel (37) positioniert ist und zu denen er unter Verschwenken um die Schwenkachse (S) relativ beweglich ist.

7. Fahrzeugsitz nach einem der vorhergehenden Ansprüche, **dadurch gekennzeichnet, dass** der Betätigungshebel (37) auf einer Achse (35b), welche am Halter (35) vorgesehen ist, verschwenkbar gelagert ist.

8. Fahrzeugsitz nach Anspruch 7, **dadurch gekennzeichnet, dass** ein achsenseitiges Ende (37a) des Betätigungshebel (37) einseitig offen ausgebildet ist und auf der Achse (35b) sitzt.

9. Fahrzeugsitz nach einem der vorhergehenden Ansprüche, **dadurch gekennzeichnet, dass** der Betätigungshebel (37) ein von der Schwenkachse (S) beabstandetes Ende (37b) hat, welches eine erste, obere Krümmung aufweist, welche mit mindestens einem Teilbereich die Anlagefläche für die Seele (33b) bildet, und eine zweite, untere Krümmung aufweist, welche eine Anlagefläche für den Betätigungsstift (14) bildet.

10. Fahrzeugsitz nach einem der vorhergehenden Ansprüche, **dadurch gekennzeichnet, dass** der Betätigungshebel (37) mindestens eine seitliche Rippe (37e) aufweist.

## Claims

1. Vehicle seat (1), in particular a motor vehicle seat,
having a longitudinal adjuster (3),
having a seat rail pair (5, 8) having a first seat rail (5) which is secured to a structure, a second seat rail (8) which is guided in this first seat rail (5) in the longitudinal direction (x) of the seat and which is connected to the vehicle seat (1),
having a releasable locking device (12) having at least one actuation pin (14) which protrudes at least in one position beyond the second seat rail (8),
a pivotably arranged actuation lever (37),
a Bowden cable (33) having a sheath (33a) and a core (33b), wherein there is provided a retention member (35) which is secured to a rail and which supports the actuation lever (37) at one end (37a) so as to be able to be pivoted about a pivot axis (S),
and there is formed on the actuation lever (37) an abutment face with which the core (33b) of the Bowden cable (33) is in abutment in a part-region between the end of the sheath (33a) and the end of the core (33b),
**characterized in that**
the retention member (35) which is secured to a rail secures the end of the core (33b) of the Bowden cable (33),
and **in that** the actuation lever (37) has a Bowden cable support (37d), on which the sheath (33a) of the Bowden cable is directly or indirectly supported.

2. Vehicle seat according to Claim 1, **characterized in that** the retention member (35) and/or the actuation lever (37) is/are formed by a plastics component.

3. Vehicle seat according to Claim 1 or Claim 2, **characterized in that** the abutment face of the actuation lever (37) is formed by a groove (37c).

4. Vehicle seat according to one of the preceding claims, **characterized in that** there is provided on the Bowden cable (33) a longitudinal compensation device (33c), which is arranged between the sheath (33a) and the Bowden cable support (37d) of the actuation lever (37).

5. Vehicle seat according to one of the preceding claims, **characterized in that** the Bowden cable (33) can be fitted to the actuation lever (37) by means of a clip (39).

6. Vehicle seat according to one of the preceding claims, **characterized in that** the retention member (35) has two lateral guides (35c) in relation to which the actuation lever (37) is positioned and in relation to which it can be moved in a relative manner by being pivoted about the pivot axis (S).

7. Vehicle seat according to one of the preceding claims, **characterized in that** the actuation lever (37) is pivotably supported on a shaft (35b) which is provided on the retention member (35).

8. Vehicle seat according to Claim 7, **characterized in that** a shaft-side end (37a) of the actuation lever (37) is constructed to be open at one side and rests on the shaft (35b).

9. Vehicle seat according to one of the preceding claims, **characterized in that** the actuation lever (37) has an end (37b) which is spaced apart from the pivot axis (S) and which has a first upper curvature, which forms with at least one part-region the abutment face for the core (33b) and which has a second lower curvature which forms an abutment face for the actuation pin (14).

10. Vehicle seat according to one of the preceding claims, **characterized in that** the actuation lever (37) has at least one lateral rib (37e).

## Revendications

1. Siège de véhicule (1), en particulier siège de véhicule à moteur,
avec un élément de réglage longitudinal (3),
avec une paire de rails de siège (5, 8) avec un premier rail de siège (5) fixe sur la structure, un deuxième rail de siège (8) assemblé au siège de véhicule (1) et guidé dans ce premier rail de siège (5) dans la direction longitudinale (x) du siège,
un dispositif de verrouillage détachable (12) avec au moins une tige d'actionnement (14), qui s'étend au-delà du deuxième rail de siège (8) au moins dans une position,
un levier d'actionnement (37) monté de façon pivotante, un câble Bowden (33) avec une gaine (33a) et une âme (33b),
dans lequel il est prévu un support (35) fixé au rail, qui porte le levier d'actionnement (37) d'une façon pivotante à une extrémité (37a) autour d'un axe de pivotement (S),
et une face d'appui est formée sur le levier d'actionnement (37), sur laquelle l'âme (33b) du câble Bowden (33) repose dans une région partielle entre l'extrémité de la gaine (33a) et l'extrémité de l'âme (33b),
**caractérisé en ce que** le support (35) fixé au rail définit l'extrémité de l'âme (33b) du câble Bowden (33) et **en ce que** le levier d'actionnement (37) présente un appui de câble Bowen (37d), sur lequel la gaine (33a) du câble Bowden s'appuie directement ou indirectement.

2. Siège de véhicule selon la revendication 1, **caractérisé en ce que** le support (35) et/ou le levier d'actionnement (37) est formé par une pièce en matière plastique.

3. Siège de véhicule selon la revendication 1 ou 2, **caractérisé en ce que** la face d'appui du levier d'actionnement (37) est formée par une rainure (37c).

4. Siège de véhicule selon l'une quelconque des revendications précédentes, **caractérisé en ce qu'**il est prévu sur le câble Bowden (33) un dispositif de compensation de longueur (33c), qui est agencé entre la gaine (33a) et l'appui de câble Bowden (37d) du levier d'actionnement (37).

5. Siège de véhicule selon l'une quelconque des revendications précédentes, **caractérisé en ce que** le câble Bowden (33) peut être attaché au levier d'actionnement (37) au moyen d'un clip (39).

6. Siège de véhicule selon l'une quelconque des revendications précédentes, **caractérisé en ce que** le support (35) présente deux guides latéraux (35c), entre lesquels le levier d'actionnement (37) est positionné et par rapport auxquels il est mobile lors d'un pivotement autour de l'axe de pivotement (S).

7. Siège de véhicule selon l'une quelconque des revendications précédentes, **caractérisé en ce que** le levier d'actionnement (37) est monté de façon pivotante autour d'un axe (35b), qui est prévu sur le support (35).

8. Siège de véhicule selon la revendication 7, **caractérisé en ce qu'**une extrémité (37a) du levier d'actionnement (37) du côté de l'axe est ouverte sur un côté et s'appuie sur l'axe (35b).

9. Siège de véhicule selon l'une quelconque des revendications précédentes, **caractérisé en ce que** le levier d'actionnement (37) comporte une extrémité (37b) éloignée de l'axe de pivotement (S), qui présente une première courbure supérieure qui forme avec au moins une région partielle la face d'appui pour l'âme (33b), et qui présente une deuxième courbure inférieure, qui forme une face d'appui pour la tige d'actionnement (14).

10. Siège de véhicule selon l'une quelconque des revendications précédentes, **caractérisé en ce que** le levier d'actionnement (37) présente au moins une nervure latérale (37e).
